# EUROPEAN PATENT SPECIFICATION

(11) **EP 3 391 266 B1**
(45) Date of publication and mention of the grant of the patent: **18.08.2021**
(21) Application number: 16787776.0
(22) Date of filing: 20.10.2016
(51) Int. Cl.: G06Q 20/32, G06Q 20/38, G06F 21/32, G06F 21/60

(54) **METHOD, DEVICE, SERVER AND SYSTEM FOR AUTHENTICATING A USER**
VERFAHREN, VORRICHTUNG, SERVER UND SYSTEM ZUR AUTHENTIFIZIERUNG EINES BENUTZERS
PROCÉDÉ, DISPOSITIF, SERVEUR ET SYSTÈME POUR AUTHENTIFIER UN UTILISATEUR

(30) Priority: 16.12.2015 EP 15307028
(43) Date of publication of application: 24.10.2018
(73) Proprietor: Thales Dis France SA, 92190 Meudon (FR)
(72) Inventor: DESJARDINS, Jean-Michel, 13881 Gemenos cedex (FR); LATHIERE, Marie, 13881 Gemenos cedex (FR)
(74) Representative: Scheer, Luc
(86) International application number: PCT/EP2016/075258
(87) International publication number: WO 2017/102142

(56) References cited:
- WO-A1-2008/111012
- US-A1- 2012 297 464

## Description

### Field of the invention:

The invention relates generally to a method for authenticating a user.

Furthermore, the invention also pertains to a device for authenticating a user. Moreover, the invention relates to a server for authenticating a user.

Lastly, the invention relates to a system for authenticating a user as well.

### State of the art:

As known per se, a Host Card Emulation (or HCE) supported by a mobile (tele)phone allows generating a payment transaction cryptogram by taking into account a Personal Identity Number (or PIN) that is entered by a phone user on a site, like in a shop. Then, the phone sends the cryptogram, through a Point Of Sale (or POS) terminal, at a server side, so as to perform a corresponding transaction. The cryptogram is verified at the server side, so as to authorize a thus requested transaction when the cryptogram is validated at the server side.

However, the server side has to access a reference user PIN, so as to verify the cryptogram. Such a need to access the reference user PIN renders the HCE based solution complex to manage at the cryptogram verifier.

Thus, there is a need to provide an alternative solution that allows authenticating a user. Patent application US 2012/0297464 A1 discloses a method for authenticating a user based on biometric information. The biometric information is combined with transactional information through a number of intermediate processes, such that it allows the server to authenticate the user.

### Summary of the invention:

The invention proposes a solution for satisfying the just herein above specified need by providing a method for authenticating a user.

According to the invention, the method comprises the following steps. A device accesses a key and an initial vector. The key is a single use key and not dependent on user authentication data. The initial vector is previously generated by using a first algorithm, a reference vector and reference user authentication data. The reference vector is previously generated without using the reference user authentication data. The device accesses data and provided user authentication data. The device generates an intermediary vector by using a second algorithm, the initial vector and the provided user authentication data. The device generates a cryptogram by using a third algorithm, the key, the intermediary vector and the data. A server receives a request for authenticating a user accompanied with the cryptogram and the data. The server accesses the key and the reference vector. The server generates a reference cryptogram by using the third algorithm, the key, the reference vector and the data. The server verifies whether the reference cryptogram does or does not match the cryptogram. If the reference cryptogram does or does not match the cryptogram, then the server does or does not authenticate the user respectively.

The principle of the invention consists in that a device generates (or gets) an intermediary vector by using a predetermined initial vector and user authentication data that is entered by a device user and/or that is captured from the device user at the device side. The predetermined initial vector depends on a reference vector and reference user authentication data. The reference vector does not depend on the reference user authentication data. Then, the device generates (or gets) a cryptogram by using data, a key and the intermediary vector. A server receives the cryptogram and the data. Then, the server generates (or gets) a reference cryptogram by using the key, the reference vector and the data. The server verifies whether the received cryptogram does or does not match the reference cryptogram. The server authenticates or not the user on a basis of a result of a comparison between the received cryptogram and the reference cryptogram.

A user of the device that implements the invention method is involved to allow carrying out an operation(s), a function(s), an action(s) and/or a process(es) to be secured and is thus aware of a pending request since she or he has to give her or his prior consent. To give her or his prior consent, she or he has to submit, at the device side, user authentication data that is used for issuing a cryptogram that depends on the submitted user authentication data and data relating to the operation(s), the function(s), the action(s) and/or the process(es) to be secured.

It is to be noteworthy that the data may be related to a user, a particular transaction(s), a particular payment transaction(s), a particular operation(s), a particular function(s), a particular action(s) and/or a particular process(es) and/or any other data type.

The device of the invention solution, as a cryptogram generator, does not need to access the reference user authentication data, so as to generate a cryptogram to be verified.

The server that verifies the received cryptogram has to access the key, the data and the reference vector, so as to produce a reference cryptogram to be compared to the received cryptogram.

It is to be noted that the reference vector that is predetermined is independent from the reference user authentication data while the reference cryptogram is a cryptogram that reflects that the submitted user authentication data matches the reference user authentication data.

The received cryptogram has to match the reference cryptogram to authenticate the user, i.e. the submitted user authentication data has to match the reference user authentication data.

The reference user authentication data may be of any type, i.e. data that is known to the user and/or data that belongs to the user.

The server of the invention solution, as a cryptogram verifier, does not need to access the reference user authentication data, so as to verify the cryptogram.

Due to an absence of any reference user authentication data at the cryptogram verifier side, the invention solution is easier to implement than an implementation of an HCE based solution which needs to access the reference user authentication data.

The invention solution is secure since the device issues a cryptogram that is cryptographically generated while involving a user and to be verified at the server side while authenticating (or not) the user through the issued cryptogram.

The invention solution is secure since neither the device that issues a cryptogram nor the server that verifies the cryptogram knows the reference user authentication data.

The invention solution does not need to use any Secure Element (or SE) at the device side, so as to store notably the reference user authentication data.

Within the present description, an SE is a smart object or device that includes a chip that protects, as a tamper resistant component, physically access to stored data and is intended to communicate data with the outside world.

The invention solution may be used notably for a payment transaction.

The invention method is notably applicable for a proximity payment transaction or an on-line payment transaction, by using a user terminal, like e.g. a mobile phone or a Personal Computer (or PC), as a device.

When used for a payment transaction, the invention solution does not need to modify the existing merchant infrastructure.

It is noteworthy that a corresponding transaction application supported by the device that allows carrying out the invention method at the device side may be based on any type of application, like e.g. an Europay Mastercard Visa (or EMV) type payment transaction application.

According to a further aspect, the invention is a device for authenticating a user.

According to the invention, the device is configured to access a key and an initial vector. The key is a single use key and not dependent on user authentication data.

The initial vector is previously generated by using a first algorithm, a reference vector and reference user authentication data. The reference vector is previously generated without using the reference user authentication data. The device is configured to access data and provided user authentication data. The device is configured to generate an intermediary vector by using a second algorithm, the initial vector Vx and the provided user authentication data. And the device is configured to generate a cryptogram by using a third algorithm, the key, the intermediary vector and the data.

The device may be a user terminal, a terminal, an embedded chip or a smart card, as an SE, that includes or is connected to a Man Machine Interface (or MMI).

The invention does not impose any constraint as to a kind of the SE type.

The SE chip may be fixed to or removable from an SE host device.

The invention is notably applicable to a mobile radio-communication field wherein the device is a mobile terminal or a chip that may be embedded, such as an embedded Universal Integrated Circuit Card (or eUICC) within an SE host device, or removable from an SE host device, like e.g. a chip included within a smart card termed Subscriber Identity Module (or SIM) type card or the like.

As a removable SE, it may be a SIM type card, a Secure Removable Module (or SRM), a smart dongle of the USB (acronym for "Universal Serial Bus") type, a (micro-) Secure Digital (or SD) type card or a Multi-Media type Card (or MMC) or any format card to be coupled or connected to a chip host device.

As to the SE host device, it may be constituted by any electronic device comprising data processing means, data storing means and one or several Input/Output (or I/O) interfaces that includes or is connected to an MMI.

According to a further aspect, the invention is a server for authenticating a user.

According to the invention, the server is configured to receive a request for authenticating a user accompanied with a cryptogram and data. The server is configured to access a key and a reference vector. The key is a single use key and not dependent on user authentication data. The reference vector is previously generated without using any reference user authentication data. The server is configured to generate a reference cryptogram by using a third algorithm, the key, the reference vector and the data. The server is configured to verify whether the reference cryptogram does or does not match the cryptogram. The server is configured to authenticate or not the user, if the reference cryptogram does or does not match the cryptogram respectively.

According to still a further aspect, the invention is a system for authenticating a user.

According to the invention, the system comprises at least one device and at least one server. The device is connected to the server. The device is configured to access a key and an initial vector. The key is a single use key and not dependent on user authentication data. The initial vector is previously generated by using a first algorithm, a reference vector and reference user authentication data. The reference vector is previously generated without using the reference user authentication data. The device is configured to access data and provided user authentication data. The device is configured to generate an intermediary vector by using a second algorithm, the initial vector and the provided user authentication data. And the device is configured to generate a cryptogram by using a third algorithm, the key, the intermediary vector and the data. The server is configured to access the key and the reference vector. The server is configured to receive a request for authenticating a user accompanied with the cryptogram and the data. The server is configured to generate a reference cryptogram by using the third algorithm, the key, the reference vector and the data. The server is configured to verify whether the reference cryptogram does or does not match the cryptogram. The server is configured to authenticate or not the user, if the reference cryptogram does or does not match the cryptogram respectively.

### Brief description of the drawings:

Additional features and advantages of the invention will be more clearly understandable after reading a detailed description of one preferred embodiment of the invention, given as one indicative and non-limitative example, in conjunction with the following drawings:

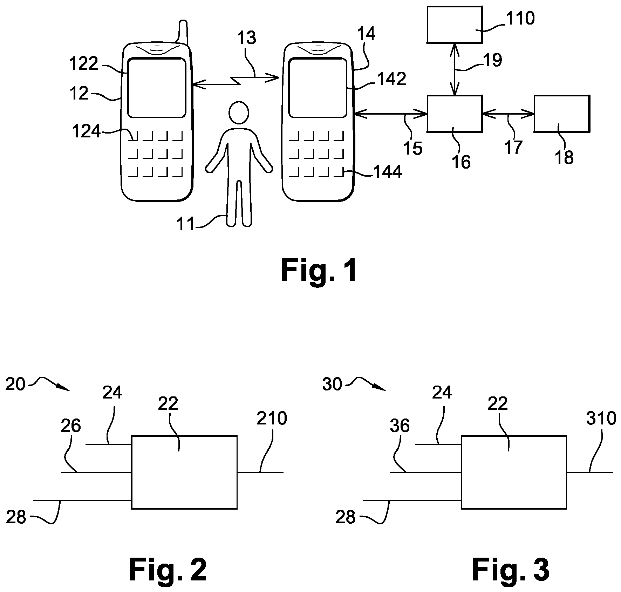

- Figure 1 is a simplified diagram of a user mobile phone being arranged to get transaction data and transmit a corresponding cryptogram dependent on an initial vector and provided user authentication data, via a POS terminal and a first server, to a second server that verifies whether the cryptogram does or does not match a reference cryptogram generated without using reference user authentication data, so as to authenticate the user, according to the invention;
- Figure 2 is a simplified scheme for generating, at a client side of the figure 1, the cryptogram by using a cryptogram generation algorithm, the transaction data, a key and an intermediary vector depending on the initial vector and the provided user authentication data, the initial vector depending on a reference vector and reference user authentication data, according to the invention;
- Figure 3 is a simplified scheme for generating, at the server side of the figure 1, the reference cryptogram by using the cryptogram generation algorithm, the transaction data, the key and a reference vector independent from the reference user authentication data, according to the invention; and

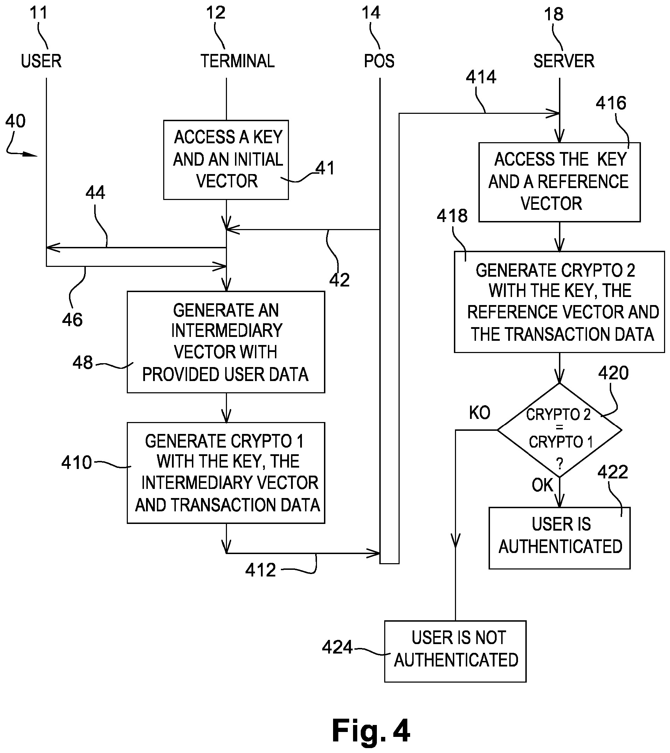

- Figure 4 illustrates a simplified example of a flow of messages exchanged between notably the user, the phone, the POS terminal and the second server of figure 1, so that the phone issues by using the figure 2 scheme a cryptogram to the second server that computes by using the figure 3 scheme a reference cryptogram to be matched, in order to authenticate the user.

### Detailed description:

Herein under is considered an embodiment in which the invention method for authenticating a user is implemented by a mobile phone, as a standalone entity, i.e. without cooperating any other device, like e.g. an SE, so as to issue notably a cryptogram. The mobile phone supports an invention user authentication application that is stored within a non-trusted environment.

According to an alternative embodiment (not represented), the invention method for authenticating a user is implemented, at a client side, by a system comprising an SE and an SE host device and that is accessed, through an MMI, by a user. The SE may be an eUICC, as a chip soldered (possibly in a removable manner) on a Printed Circuit Board (or PCB) of the SE host device, or removable from the SE host device at the client side.

Alternately, instead of an eUICC, the SE chip may be a Trusted Execution Environment (or TEE), as an SE and a secure area of a user terminal processor and a secured runtime environment.

The SE may have different form factors.

Instead of being embedded within its host device, the SE chip may be carried by a medium, such as a smart card or a dongle, like e.g. a USB type dongle, so as to be coupled or connected to the SE host device.

According to such an alternative embodiment (not represented), the SE is adapted to carry out at least part of the functions that are described infra and that are carried out by the mobile phone.

Naturally, the herein below described embodiment is only for exemplifying purposes and is not considered to reduce the scope of the invention.

**Figure 1** shows schematically, at a client side, a user 11, a mobile phone 12, as a user terminal, a POS type terminal 14, a first remote server 16, a second remote server 18 and a third remote server 110.

For the sake of simplicity, the mobile phone 12, the POS type terminal 14, the first remote server 16, the second remote server 18 and the third remote server 110 are termed infra the TE 12, the POS 14, the first server 16, the second server 18 and the third server 110 respectively.

The user 11 uses her or his phone 12 to cooperate locally, e.g. within a store or a shop, with the POS 14 by using a Short Range (or SR) Radio-Frequency (or RF) link 13, as a ConTact-Less (or CTL) channel, so as to carry out a proximity (payment) transaction. The transaction is processed via a (payment) transaction acquirer (bank) system based on a so-termed Card Not Present (or CNP) payment transaction. The SR RF link frequency may be fixed at, for instance 13,56 MHz, like e.g. with a Near Field Communication (or NFC) type technology (up to 20 cm between the phone 12 and the POS 14) or the like (such as Bluetooth (registered Trademark), Bluetooth Low Energy (registered Trademark) and/or Zigbee (registered Trademark)).

Alternatively, instead of using a CTL channel, the phone 12 is linked, through a wire, as a ConTact (or CT) channel, to the POS 14 to carry out a proximity transaction with a merchant.

According to another embodiment (not represented), a user device or a user system is used for an on-line payment transaction, in a so-termed e-commerce (i.e. Over The Internet (or OTI)) or a mobile commerce (i.e. Over The Air (or OTA)), with a merchant server.

Instead of the phone 12, the user terminal may be, among others, a Personal Digital Assistant (or PDA), a vehicle, a set-top box, a tablet computer, a desktop computer, a laptop computer, a PC, a video player, an audio player, a portable TeleVision (or TV), a media-player, a game console, a netbook or an electronic device with a Man Machine Interface (or MMI) or an access to an MMI.

The phone 12, as a user terminal, includes (or is connected or coupled to) a display screen 122 and a keyboard 124, as a phone MMI.

Alternatively, instead of a physical keyboard separated from the display screen, the phone 12 is equipped with a touch sensitive display screen, as a virtual keyboard.

The phone MMI or a MMI connected or coupled to the phone 12 allows the user 11 to present or enter a PIN or the like and/or allows the phone 12 to capture one or several biometric prints relating to the user 11, as provided User Authentication Data (or UAD). The provided UAD, i.e. that is entered by the user 11 and/or that is captured by the phone 12 (and/or a device(s) cooperating with the phone 12), is used for generating a cryptogram to be sent to the server side.

The UAD includes data that is known to the user 11, like e.g. a PIN, a password, a passcode and/or user credentials, such as a One Time Password (or OTP), and/or data that belongs to the user 11, like e.g. one or several finger prints, one or two palm prints, one or two iris and/or a face, as one or several biometric prints relating to the user 11.

The phone 12 comprises a (micro)processor(s), as means for processing data, comprising (or being connected to) an Input/Output (or I/O) interface(s), as communication means for exchanging data with outside and comprising (or being connected to) a memory(ies), as means for storing data.

The phone memory may comprise one or several memories including one or several volatile memories and one or several non-volatile memories.

The phone memory may be constituted by one or several EEPROMs (acronym for "Electrically Erasable Programmable Read-Only Memory"), one or several ROMs (acronym for "Read Only Memory"), one or several Flash memories, and/or any other memories of different types, like one or several RAMs (acronym for "Random Access Memory").

The phone I/O interface(s) includes (or is connected to) a CTL (and/or CT) interface while using the SR RF link 13.

The SR RF link 13 may be related to any technology that allows the phone 12 to exchange data with the POS 14, like e.g. to get from the POS 14 a transaction amount, a transaction date and other transaction data, as Transaction Data (or TD).

Instead of passing through a POS terminal, the phone 12 is able to use one or several Long Range (or LR) Radio-Frequency (or RF) links (not represented) for accessing, OTA, through an antenna 126 and one or several mobile (radio-communication) networks, to the server side.

The LR RF may be fixed at several hundreds of MHz, for instance, around 850, 900, 1800, 1900 and/or 2100 MHz.

According to another embodiment (not represented), instead of using a mobile network(s), the terminal is connected, via a set-top box or the like, as a Network Access Point (or NAS), OTI to the server side.

The phone memory(ies) stores an Operating System (or OS).

The phone memory(ies) (or a device, like e.g. an SE, cooperating with the phone 12) stores preferably one or several applications, among which there is a payment transaction application, like e.g. an EMV type application, that uses an invention user authentication application.

The phone memory(ies) stores a Primary Account Number (or PAN), a Dynamic Primary Account Number (or DPAN), as a (digital) token, a PAN alias and/or a PAN alternate, as data relating to a user account. The data relating to a user account is used for identifying a bank user account or the like at the server side. The data relating to a user account is to be associated with a (payment) Transaction Cryptogram (or TC), as a first cryptogram, to be issued from the phone 12.

The phone memory(ies) stores preferably in a temporary manner the provided UAD.

The phone memory(ies) (or a device, like e.g. an SE, cooperating with the phone 12) stores one (or several) key(s) that is(are) shared with the server side.

Each key is used for generating a TC.

The key may be a limited use key, like e.g. a single use key or termed a session key, that is used e.g. in a certain predefined time period and/or a certain count of use for a predefined number of transactions, like e.g. one, two or more transactions.

Alternately, instead of a limited use key, the key is permanent.

The key is preferably not dependent on any provided UAD.

The key may have been previously loaded during a phone manufacturing process before the phone issuance or downloaded from a remote server after the phone issuance.

Once retrieved from an external entity, like e.g. the POS 14, the phone memory(ies) stores, at least in a temporary manner, the TD, such as a transaction amount, a transaction currency, a transaction date and/or other data.

The phone memory may store an Application Transaction Counter (or ATC) and/or other data that changes from a transaction to another transaction. As known per se, an ATC value is incremented at each transaction. The phone memory(ies) may store (bank) card data, such as e.g.:
- a Card Type; a Name on Card;a Card number;a Card Verification Value (or CW); and/or
- an Expiry Date (or ED).

According to an essential feature of the invention, the phone 12 (or a device, like e.g. an SE, cooperating with the phone 12) memory(ies) stores an initial vector (or Vx) or a set of Vxs. The phone 12 does not generate the Vx or the set of Vxs. The Vx includes one or several data items. The Vx may have been previously loaded during a phone manufacturing process before the phone issuance or downloaded from a remote server after the phone issuance. The Vx is predefined, e.g. by a bank issuer or on its behalf at the server side, by using e.g. a XOR function, as a predetermined first algorithm, a reference vector (or Vref) and a reference PIN or the like, as reference UAD.

According to an important feature of the invention, the Vref is predefined without using the reference UAD. The Vref or a set of Vrefs has been previously generated.The or each Vref is preferably a variable element. The or each Vref is preferably valid for a given transaction and the Vref value therefore changes from a first to a second transaction. The transaction is a transmission of data from the phone 12 (or a device, like e.g. an SE, that is connected or coupled to the phone 12) to the first server 16. The Vref value may be e.g. a random or a (pseudo)random value.

The phone 12 (or a device, like e.g. an SE, that is connected or coupled to the phone 12) is preferably configured to generate an intermediary vector V or a set of Vs. To generate a V, the phone 12 uses e.g. a XOR function, as a predetermined second algorithm, the Vx and the provided UAD. The second algorithm is an inverse algorithm of the first algorithm.

Thus, if the provided UAD matches a reference UAD, then the V matches the Vref. Otherwise, i.e. if the provided UAD does not match a reference UAD, the V does not match the Vref. The reference UAD is not stored at the phone 12 side.

The phone 12 is preferably configured to generate a TC, as a kind of a (digital) user signature.

To generate a TC, the phone 12 uses a predetermined third algorithm shared with the server side, the key, the V and the data, like e.g. the TD, as described infra in relation with the figure 2.

The phone 12 is arranged to send to the server side a request for authenticating the user accompanied with the (generated) TC. The phone 12 may be arranged to send further to the server side the data that is used to generate the TC.

The phone 12 is connected, through the bi-directional link 13, to the POS 14.

The POS 14 is able to provide an external entity, like e.g. the phone 12, with TD possibly after a request originating from the external entity.

The POS 14 comprises a (micro)processor(s), as means for processing data, comprising (or being connected to) two (or more) I/O interfaces, as communication means for exchanging data with outside, and comprising (or being connected to) a memory(ies), as means for storing data.

The POS memory (not represented) may comprise one or several memories including one or several volatile memories and one or several non-volatile memories.

The POS memory may store data relating to a Uniform Resource Identifier(s) (or URI), a Uniform Resource Locator(s) (or URL) and/or an Internet Protocol (or IP) address(es) of an external entity(ies) to be addressed, like e.g. the first server 16.

The POS 14 includes (or is connected or coupled to) a display screen 142 and a keyboard 144, as a POS MMI.

Alternatively, instead of a physical keyboard separated from the display screen, the POS 14 is equipped with a touch sensitive display screen, as a virtual keyboard.

The POS MMI or a MMI connected or coupled to the POS 14 allows a user, as a merchant, to present or enter a transaction amount and/or other data, as TD. The provided TD, i.e. that is entered by the merchant and/or that is stored by the POS 14 (and/or a remote server cooperating with the POS 14), is used by the client device, like e.g. the phone 12, to generate a corresponding TC to be sent, through the POS 14, to the server side.

The POS 14 is able to receive from an external entity, like e.g. the phone 12, a request for authenticating the user accompanied with the TC and possibly the TD (after a possible request originating from the POS 14).

The POS 14 is able to send to the server side a request for authorizing a transaction accompanied with the received TC and the TD.

The POS 14 is able to receive from the server side, as a response to the request for authorizing a transaction, a success or a failure relating to the transaction based on a user authentication at the server side.

The POS 14 is connected preferably, through a bi-directional wire link 15, to the first server 16.

The first server 16 is hosted by a computer with data processing means, data storing means and several I/O interfaces.

The first server 16 is able to receive a message originating, through the POS 14, from a client device side, like e.g. the phone 12, and that includes a request for authorizing a transaction that is accompanied with a TC and corresponding TD, like e.g. a transaction amount and/or a transaction currency. The TD relates to a product(s) and/or a service(s) that the user 11 desires to buy or rent.

The first server 16 is able to identify a second server 18 that is used for verifying a received TC, so as to authenticate (or not) the user involved at the client side.

The received message originating, through the POS 14, from the client device side includes, along with a request for authorizing a transaction, preferably data relating to a user account.

The data relating to a user account includes preferably data, like e.g. a Bank Identification Number (or BIN) or an Issuer Identification Number (or IIN), as a bank issuer identifier, and/or an identifier(s), such as e.g. a URI and/or a URL, relating to a third server 110 to be addressed for a payment transaction in progress after a user authentication carried out at the second server 18 side.

The first server 16 is able to identify, based on the received data, a third server 110 that is used for authorizing (or not) a transaction after a user authentication carried out at the second server 18 side and that manages a user account to be identified.

The first server 16 plays a role of an intermediary entity between the client device, like e.g. the phone 12, that issues the TC, the second server 18 that verifies the TC, and the third server 110 that authorizes (or not) a requested transaction based on the user authentication carried out by the second server 18.

The first server 16 allows routing data that originates from the client device side or the server side to the POS 14, the second server 18 or the third server 110.

The first server 16 is connected (or coupled), through preferably a bi-directional wire link 17, to the second server 18.

The first server 16 is connected (or coupled), through preferably a bi-directional wire link 19, to the third server 110.

The second server 18 is hosted by a computer with one or several processors, as data processing means, one or several memories, as data storing means, and one or several I/O interfaces.

The second server 18 processor(s) process(es), control(s) and communicate(s) internally data with all the other components incorporated within the second server 18 and, through the server I/O interface(s), with the second server 18 exterior.

The second server 18 processor executes or runs at least an invention user authentication application.

The second server 18 memory stores or accesses the invention user authentication application that uses, as described in relation with figure 3, a predetermined third algorithm and received data, as input data to the third algorithm, so as to generate a reference TC (or TCref) to be matched by a TC to be received from the client device side.

The second server 18 is configured to receive a request for authenticating a user accompanied with a TC and data. The data has been used to generate the TC and is to be used for generating a TCref.

A second server 18 memory or a memory connected or coupled to the second server 18 stores a key shared with the client side that is used for generating a TCref.

A second server 18 memory or a memory connected or coupled to the second server 18 stores a Vref that is used for generating a TCref.

A reference PIN, reference user credentials, a reference password, a reference passcode and/or biometric data relating to the concerned user, as reference UAD, is(are) not stored at the second server 18 side.

The second server 18 is configured to access a key and the Vref.

The key is shared with the client side.

The Vref is previously generated at the server side e.g. by a bank issuer or on its behalf.

The Vref is previously generated without using any reference UAD.

The Vref is provided to the second server 18 (or another entity accessible from the second server 18).

The second server 18 is preferably configured to generate (or let generate) a TCref, as a (digital) user signature to be matched, in order to authenticate a user that provides UAD at a client side.

To generate a TCref, the second server 18 uses, as described infra in relation with the figure 3, a predetermined third algorithm shared with the client side, the key, the Vref and received data, like e.g. TD, that is used at the client side to issue a TC to be verified.

The second server 18 is preferably configured to verify (or let verify) whether the TCref does or does not match the (received) TC.

If the verification is positive, i.e. the TCref matches the TC, then the second server 18 authenticates the user.

Otherwise, i.e. when the verification is negative, i.e. the TCref does not match the TC, the second server 18 does not authenticate the user.

The second server 18 is preferably configured to send to the first server 16, as a response to the (received) request for authenticating a user, a corresponding verification result, i.e. a success or a failure of the user authentication.

Instead of exchanging with the first server 16 or the third server 110, the second server 18 may carry out at least part of the functions that are carried out, as described supra and infra, by the first server 16 and/or the third server 110.

The second server 18 may be connected (or coupled), through a bi-directional wire link (not represented), to the third server 110.

The third server 110 is hosted by a computer with one or several processors, as data processing means, one or several memories, as data storing means, and one or several I/O interfaces.

The third server 110 is configured to receive a request for authorizing a transaction accompanied with data relating to a user account based on a user authentication result issued from or through the second server 18.

The third server 110 is configured to identify, based on received data, a user account, after a possible de-tokenization (when the data relating to the user account issued from the client side includes a token, like e.g. a DPAN).

A third server 110 memory or a memory connected or coupled to the third server 110 stores preferably a database relating to a plurality of user accounts. The database includes data relating to each user account, like e.g. a bank balance.

The third server 110 is able to receive data, like e.g. a DPAN, a PAN alias, a PAN alternate and/or a PAN, relating to a user account.

The third server 110 is able to access data, such as a PAN or the like, relating to the user account.

The third server 110 is able to retrieve, based on the received data relating to a user account, one or several identifiers relating to a user account, like e.g. a PAN.

The third server 110 is configured to receive, from or through the second server 18, as a cryptogram verifier, a user authentication result.

The third server 110 is preferably configured, only if the user authentication result is successful, to verify (or let verify) whether the data relating to the identified user account allows authorizing (or not) a requested (payment) transaction.

Alternately, instead of a payment transaction, another entity, like e.g. a server, connected or coupled to the second server 18 is configured, only if the user authentication result is successful, after one or several possible verifications, to authorize (or not) to carry out one or several operations, one or several functions, one or several actions and/or one or several processes.

If the verification is positive, then the third server 110 authorizes the requested transaction and carries out (or lets carry out) the requested transaction.

Otherwise, i.e. when the verification is negative, the third server 110 denies or refuses the requested transaction.

The third server 110 is preferably configured to send to the first server 16, as a response to the (received) request for authorizing a transaction, a corresponding result, i.e. an authorization or a deny (or a refusal) of the transaction.

**Figure 2** is an exemplary embodiment of an algorithm 20 for generating a first cryptogram that is used by the phone 12 (or another device, like e.g. an SE, that cooperates with the phone 12), as a client device, to issue the first cryptogram.

The first cryptogram generation algorithm 20 includes a predetermined algorithm 22 for generating a cryptogram.

The algorithm 22 for generating a cryptogram includes a cryptographic algorithm, as a predetermined third algorithm, such as a Data Encryption Standard (or DES), a triple DES, a Message Authentication Code (or MAC) type algorithm or any other symmetric key algorithm that uses a key that is shared with the server side or another entity that has to verify the generated cryptogram.

Such a cryptogram generation algorithm 22 has a key 24, as a first input, an intermediary vector V 26, as a second input, and data 28, as a third input.

The key 24 is stored by the phone 12 or another device, like e.g. an SE, that cooperates with the phone 12. The key 24 is accessible from the phone 12. The key 24 may be a limited use key or a permanent key. The key 24 may have, as a first length value, 16 bytes.

The V 26 is stored by the phone 12 or another device, like e.g. an SE, that cooperates with the phone 12. The V 26 is accessible from the phone 12. The V 26 is generated by the phone 12 (or another device, like e.g. an SE, cooperating with the phone 12) by using the provided UAD and the Vx that has been provided by an external entity, like e.g. a server. The Vx depends on the Vref (that is independent from the reference UAD) and the reference UAD. The V 26 depends on the Vref, the reference UAD and the provided UAD. If the provided UAD matches the reference UAD, then the V 26 is the Vref. Otherwise, i.e. if the provided UAD does not match the reference UAD, the V 26 is distinct from the Vref. The provided UAD and the reference UAD may have, as a second length value, 8 bytes. The V 26 and the Vref may have, as the second length value, 8 bytes. The use of a computation with such a second length value that is less than a third length value relating to the cryptogram is quick.

The data 28 is stored by the phone 12 or another device, like e.g. an SE, that cooperates with the phone 12. The data 28 is accessible from the phone 12. The data 28 may be any predetermined data, like e.g. TD that relates to a requested (payment) transaction, that relates to an operation(s), a function(s), an action(s) and/or a process(es) that need(s) a user authentication.

The cryptogram generation algorithm 22 may use other predetermined data, as one or several additional inputs, accessible from the phone 12.

The other data is stored by the phone 12 or another device, like e.g. an SE or the POS 14, that cooperates with the phone 12, and/or provided by the user 11, like e.g. card data.

The cryptogram generation algorithm 22 allows generating a first cryptogram 210, like e.g. a TC by using preferably one or several pieces of predetermined TD. The TC may include a predetermined number N of digits (as an hexadecimal number(s)) (or (an)other information unit(s), like e.g. bit(s) or byte(s)), as a third length value. The predetermined number N of digits is included within a first range from e.g. 16 to 19 digits.

A generation of the first cryptogram, like e.g. a TC, allows authenticating successfully a user, only if successfully recognized, i.e. verified, at the second server 18 side, while securing the user authentication, i.e. without accessing the reference UAD at the client device side.

**Figure 3** is an exemplary embodiment of an algorithm 30 for generating a second cryptogram that is used as a reference cryptogram by the second server 18 to verify whether the first cryptogram is or is not valid by comparing the first cryptogram to the second cryptogram.

The second cryptogram generation algorithm 30 includes the algorithm 22 for generating a cryptogram that is shared with the phone 12, as a client device.

The algorithm 22 for generating a cryptogram includes a cryptographic algorithm, as a predetermined third algorithm, such as a DES, a triple DES, a MAC type algorithm or any other symmetric key algorithm that uses a key that is shared with the client device side or another entity that has to generate a cryptogram to be verified.

Such a cryptogram generation algorithm 22 has the key 24, as a first input, a Vref 36, as a second input, and data 28, as a third input.

The key 24 is shared with the client device.

The Vref 36 is stored by the second server 18 or another server connected to the second server 18. The Vref 36 is accessible from the second server 18. The Vref 36 is independent from the reference UAD. The Vref 36 may have, as the second length value, 8 bytes.

The data 28 is stored, after its reception from the client device or another device, like e.g. an SE, that cooperates with the client device, at the second server 18 side. The data 28 is accessible from the second server 18. The data 28 may be any predetermined data, like e.g. TD that relates to a requested transaction, that relates to an operation(s), a function(s), an action(s) and/or a process(es) that need(s) a user authentication.

The cryptogram generation algorithm 22 may use other predetermined data, as one or several additional inputs, accessible from the second server 18.

The other data is stored by the second server 18 or another entity that cooperates with the second server 18.

The cryptogram generation algorithm 22 allows generating a second cryptogram 310, as a reference cryptogram, like e.g. a TCref by using preferably one or several pieces of predetermined TD, as data 28 that is to be received from the client device or any entity that cooperates with the client device. The TCref may include a predetermined number N of digits (as an hexadecimal number(s)) (or (an)other information unit(s), like e.g. bit(s) or byte(s)), as the third length value. The predetermined number N of digits is included within a first range from e.g. 16 to 19 digits.

A generation of a second cryptogram, like e.g. a TCref, allows authenticating successfully a user, only if successfully recognized, i.e. verified, at the second server 18 side, while securing the user authentication, i.e. without accessing the reference UAD at the second server 18 side.

**Figure 4** depicts an exemplary embodiment of a message flow 40 that involves the user 11, the phone 12, the POS 14 and the second server 18.

In the explained example, it is assumed that the client device is the phone 12, as a user terminal, a standalone entity and a generator of a TC, as a first cryptogram, so as to request a (payment) transaction that needs a user authentication.

It is also assumed that the second server 18 plays a role of a verifier of the TC that is generated at the client device.

The phone 12 accesses 41 a key and an initial vector Vx.

A merchant of a product(s) and/or a service(s) may enter at the POS 14 an amount relating to a (payment) transaction, as data relating to a (payment) transaction, that a user 11 of the phone 12 desires to buy.

The POS 14 sends to the phone 12 a message 42 including the transaction amount, a transaction currency and/or other transaction data, as TD.

The phone 12 presents to the user 11 a message 44, such as e.g. "please enter your PIN", that requests the user 11 to provide a PIN, as UAD.

The user 11 provides, through the phone MMI, to the phone 14 a PIN 46, as a user request response.

The phone 12 generates 48 an intermediary vector V by using e.g. a "XOR" algorithm, as a predetermined second algorithm, the Vx and the provided PIN.

Then, the phone 12 generates 410 CRYPTO1, as a first cryptogram, by using e.g. a DES type algorithm, as a predetermined third algorithm, the key, the V and the TD.

Once the CRYPTO1 is generated, the phone 12 sends to the POS 14 a message 412 that includes a request for authenticating a user accompanied with the CRYPTO1 and preferably e.g. a DPAN, as data relating to a user account.

Optionally, the message 412 further includes the TD.

The POS 14 generates a request for authorizing a payment transaction.

The POS 14 sends, through the first server 16, to the second server 18 the request for authenticating a user with the CRYPTO1 and the TD.

The second server 18 accesses 416 the key and a reference vector Vref.

The second server 18 generates 418 CRYPTO2, as a TCref, a second and reference cryptogram, by using e.g. the DES type algorithm, as the predetermined third algorithm, the key, the Vref and the TD.

Once the CRYPTO2 is generated, the second server 18 verifies 420 whether the CRYPTO2 does or does not match the (received) CRYPTO1.

If the CRYPTO2 matches the CRYPTO1, then the second server 18 authenticates 422 successfully the user 11. Such a positive cryptogram verification ensures a user authentication (the provided UAD is the correct one, i.e. the reference UAD), an authenticity of the phone 12 (only the one that supports an invention user authentication application) and a data integrity, i.e. the data used for generating the CRYPTO1 (and thus the CRYPTO2) does not undergo a data alteration which lead otherwise to failing the cryptogram verification at the server side.

Otherwise, i.e. if there is a discrepancy between the CRYPTO2 and the CRYPTO1, the second server 18 does not authenticate 424 the user 11.

Irrespective of whether the user authentication has succeeded or failed by comparing the first cryptogram generated by the second server 18 to the second cryptogram generated by the phone 12, the second server 18 sends to the first server 16 a message (not represented) including a user authentication result, like e.g. "OK", as a user authentication success, or "KO", as a user authentication failure.

The first server 16 sends to the third server 110 a message (not represented) including the request for authorizing a payment transaction accompanied with the (received) user authentication result, the (received) TD and the (received) data relating to the user account.

The third server 110 retrieves an identifier(s) relating to a user account, like e.g. a PAN, based on the (received) DPAN, as (received) data relating to the user account.

The third server 110 verifies whether the requested transaction is authorized or refused by using at least certain data relating to the identified user account.

If the user authentication result is negative, i.e. the user authentication is not successfully verified by the second server 18, then the third server 110 refuses the requested transaction.

If the user authentication result is positive, i.e. the user authentication is successfully verified by the second server 18, then the third server 110 authorizes or refuses, after one or several data verifications, like e.g. a bank balance that is higher than the (received) TD, the requested transaction.

Irrespective of whether the requested transaction is authorized or refused, the third server 110 sends, preferably through the first server 16, to the POS 14 a message (not represented) including a payment transaction result, like e.g. "transaction refused" or "transaction authorized".

Then, the POS 14 provides, through a POS MMI or a MMI connected or coupled to the POS 14, the merchant with the payment transaction result.

The invention solution allows securing a user authentication without that the involved device knows reference user authentication data since neither a client device that issues a cryptogram nor a cryptogram verification device, like e.g. a server, that verifies the cryptogram knows the reference user authentication data.

The invention solution does not need to use any SE at the client device side.

The invention solution is compatible notably with the existing merchant infrastructure.

Such an invention user authentication method allows re-using an existing bank infrastructure reducing thus a technical complexity and corresponding costs to offer a secure user authentication service.

The embodiment that has just been described is not intended to limit the scope of the concerned invention. Other embodiments may be given. As another embodiment example, instead of two servers 16 and 18 that are involved, only one server allows authenticating (or not) a user. As still another embodiment example, instead of the phone 12 that is involved, another device, like e.g. an SE, cooperating with the phone 12 allows issuing an on-board generated cryptogram to be verified at the server side, so as to authenticate (or not) a user prior to continuing an execution of a process, like e.g. a user payment transaction authorization process.

## Claims

1. A method (40) for authenticating a user, comprising:
- accessing (41), by a device (12), a key and at least one initial vector, the key being a single use key and not dependent on user authentication data, the at least one initial vector being previously generated by using a first algorithm, at least one reference vector and reference user authentication data, the at least one reference vector being previously generated without using the reference user authentication data;
- accessing, by the device, data (42) and provided user authentication data (46);
- generating (48), by the device, at least one intermediary vector by using a second algorithm, the at least one initial vector and the provided user authentication data;
- generating (410), by the device, a cryptogram by using a third algorithm (22), the key, the at least one intermediary vector and the data;
- receiving (410), by a server (18), a request (414) for authenticating a user accompanied with the cryptogram and the data;
- accessing (416), by the server, the key and the at least one reference vector;
- generating (418), by the server, a reference cryptogram by using the third algorithm, the key, the at least one reference vector and the data;
- verifying (420), by the server, whether the reference cryptogram does or does not match the cryptogram; and
- authenticating (422) or not (424), by the server, if the reference cryptogram does or does not match the cryptogram, the user respectively.

2. Method according to claim 1, wherein, the data including payment transaction data, the request for authenticating a user is further accompanied with a request for authorizing a payment transaction and data relating to a user account and the server or another server further retrieves at least one identifier relating to a user account based upon the data relating to the user account.

3. Method according to claim 1 or 2, wherein the or each reference vector is valid for a given transaction.

4. Method according to any of claims 1 to 3, wherein the user authentication data includes at least one element of a group comprising:
- a Personal Identity Number;
- at least one biometric print;
- user credentials;
- a password;
- a passcode,

5. Method according to claim 2, wherein the at least one identifier relating to a user account and/or the data relating to the user account includes at least one element of a group comprising:
- a Primary Account Number;
- a Dynamic Primary Account Number;
- a Primary Account Number alias;
- a Primary Account Number alternate.

6. Method according to any of claims 1 to 5, wherein the second algorithm is an inverse algorithm of the first algorithm.

7. Method according to any of claims 1 to 6, wherein the third algorithm includes at least one element of a group comprising:
- a Data Encryption Standard or DES type algorithm;
- a Triple DES type algorithm;
- a Message Authentication Code type algorithm;
- an algorithm using a symmetric key.

8. A device (12) for authenticating a user,
**wherein** the device is configured to:
- access (41) a key and at least one initial vector, the key being a single use key and not dependent on user authentication data, the at least one initial vector being previously generated by using a first algorithm, at least one reference vector and reference user authentication data, the at least one reference vector being previously generated without using the reference user authentication data;
- access data (42) and provided user authentication data (46);
- generate (48) at least one intermediary vector by using a second algorithm, the at least one initial vector and the provided user authentication data; and
- generate (410) a cryptogram by using a third algorithm, the key, the at least one intermediary vector and the data; and
sending to a server a request for authenticating the user accompanied with the cryptogram and the data.

9. A server (18) for authenticating a user,
**wherein** the server is configured to:
- receive a request (414) for authenticating a user accompanied with a cryptogram and data;
- access (416) a key and at least one reference vector, the key being a single use key and not dependent on user authentication data, the at least one reference vector being previously generated without using any reference user authentication data;
- generate (418) a reference cryptogram by using a third algorithm (22), the key, the at least one reference vector and the data;
- verify (420) whether the reference cryptogram does or does not match the cryptogram;
- authenticate (422) or not (424) the user, if the reference cryptogram does or does not match the cryptogram respectively.

10. A system for authenticating a user,
**wherein**, the system comprising at least one device (12) and at least one server (18), the device being connected to the server, the device is configured to:
- access (41) a key and at least one initial vector, the key being a single use key and not dependent on user authentication data, the at least one initial vector being previously generated by using a first algorithm, at least one reference vector and reference user authentication data, the at least one reference vector being previously generated without using the reference user authentication data;
- access data (42) and provided user authentication data (46);
- generate (48) at least one intermediary vector by using a second algorithm, the at least one initial vector and the provided user authentication data; and
- generate (410) a cryptogram by using a third algorithm, the key, the at least one intermediary vector and the data;
**and in that** the server is configured to:
- access (416) the key and the at least one reference vector;
- receive a request (414) for authenticating a user accompanied with the cryptogram and the data;
- generate (418) a reference cryptogram by using the third algorithm, the key, the at least one reference vector and the data;
- verify (420) whether the reference cryptogram does or does not match the cryptogram;
- authenticate (422) or not (424) the user, if the reference cryptogram does or does not match the cryptogram respectively.

## Patentansprüche

1. Verfahren (40) zum Authentifizieren eines Benutzers, umfassend:
- Zugreifen (41) auf einen Schlüssel und mindestens einen Anfangsvektor durch eine Vorrichtung (12), wobei der Schlüssel ein Schlüssel zur einmaligen Verwendung ist und nicht von Benutzerauthentifizierungsdaten abhängt, wobei der mindestens eine Anfangsvektor zuvor unter Verwendung eines ersten Algorithmus erzeugt wurde, auf mindestens einen Referenzvektor und Referenz-Benutzerauthentifizierungsdaten, wobei der mindestens eine Referenzvektor zuvor ohne Verwendung der Referenz-Benutzerauthentifizierungsdaten erzeugt wurde;
- Zugreifen auf Daten (42) und bereitgestellte Benutzerauthentifizierungsdaten (46) durch die Vorrichtung;
- Erzeugen (48) mindestens eines Zwischenvektors durch die Vorrichtung unter Verwendung eines zweiten Algorithmus, des mindestens einen Anfangsvektors und der bereitgestellten Benutzerauthentifizierungsdaten;
- Erzeugen (410) eines Kryptogramms durch die Vorrichtung unter Verwendung eines dritten Algorithmus (22), des Schlüssels, des mindestens einen Zwischenvektors und der Daten;
- Empfangen (410) einer Anforderung (414) zur Authentifizierung eines Benutzers durch einen Server (18), begleitet von dem Kryptogramm und den Daten;
- Zugreifen (416) auf den Schlüssel und den mindestens einen Referenzvektor durch den Server;
- Erzeugen (418) eines Referenzkryptogramms durch den Server unter Verwendung des dritten Algorithmus, des Schlüssels, des mindestens einen Referenzvektors und der Daten;
- Überprüfen (420) durch den Server, ob das Referenzkryptogramm mit dem Kryptogramm übereinstimmt oder nicht; und
- Authentifizieren (422) oder nicht (424) des jeweiligen Benutzers, wenn das Referenzkryptogramm mit dem Kryptogramm übereinstimmt oder nicht, durch den Server.

2. Verfahren nach Anspruch 1, wobei die Daten Zahlungstransaktionsdaten einschließen, die Anforderung zur Authentifizierung eines Benutzers weiterhin mit einer Anforderung zur Autorisierung einer Zahlungstransaktion und Daten, die sich auf ein Benutzerkonto beziehen, einhergeht und der Server oder ein anderer Server weiterhin mindestens eine Kennung abruft, die sich auf ein Benutzerkonto bezieht, basierend auf den Daten, die sich auf das Benutzerkonto beziehen.

3. Verfahren nach Anspruch 1 oder 2, wobei der oder jeder Referenzvektor für eine bestimmte Transaktion gültig ist.

4. Verfahren nach einem der Ansprüche 1 bis 3, wobei die Benutzerauthentifizierungsdaten mindestens ein Element aus einer Gruppe einschließen, umfassend:
- eine persönliche Identifikationsnummer;
- mindestens einen biometrischen Abdruck;
- Benutzeranmeldeinformationen;
- ein Passwort;
- einen Passcode,

5. Verfahren nach Anspruch 2, wobei die mindestens eine Kennung, die sich auf ein Benutzerkonto bezieht, und/oder die Daten, die sich auf das Benutzerkonto beziehen, mindestens ein Element aus einer Gruppe einschließen, umfassend:
- eine Primary Account Number;
- eine dynamische Primary Account Number;
- ein Alias für die Primary Account Number;
- einen Ersatz für die Primary Account Number.

6. Verfahren nach einem der Ansprüche 1 bis 5, wobei der zweite Algorithmus ein inverser Algorithmus des ersten Algorithmus ist.

7. Verfahren nach einem der Ansprüche 1 bis 6, wobei der dritte Algorithmus mindestens ein Element aus einer Gruppe einschließt, umfassend:
- einen Algorithmus vom Typ Data Encryption Standard oder DES;
- einen Algorithmus vom Typ Triple DES;
- einen Algorithmus vom Typ Message Authentication Code;
- einen Algorithmus, der einen symmetrischen Schlüssel verwendet.

8. Vorrichtung (12) zum Authentifizieren eines Benutzers,
**wobei** die Vorrichtung konfiguriert ist zum:
- Zugreifen (41) auf einen Schlüssel und mindestens einen Anfangsvektor, wobei der Schlüssel ein Schlüssel zur einmaligen Verwendung ist und nicht von Benutzerauthentifizierungsdaten abhängt, wobei der mindestens eine Anfangsvektor zuvor unter Verwendung eines ersten Algorithmus erzeugt wurde, auf mindestens einen Referenzvektor und Referenz-Benutzerauthentifizierungsdaten, wobei der mindestens eine Referenzvektor zuvor ohne Verwendung der Referenz-Benutzerauthentifizierungsdaten erzeugt wurde;
- Zugreifen auf Daten (42) und bereitgestellte Benutzerauthentifizierungsdaten (46);
- Erzeugen (48) mindestens eines Zwischenvektors unter Verwendung eines zweiten Algorithmus, des mindestens einen Anfangsvektors und der bereitgestellten Benutzerauthentifizierungsdaten; und
- Erzeugen (410) eines Kryptogramms unter Verwendung eines dritten Algorithmus, des Schlüssels, des mindestens einen Zwischenvektors und der Daten; und
Senden einer mit dem Kryptogramm und den Daten einhergehenden Anforderung zum Authentifizieren des Benutzers an einen Server.

9. Server (18) zum Authentifizieren eines Benutzers,
**wobei** der Server konfiguriert ist zum:
- Empfangen einer Anforderung (414) zur Authentifizierung eines Benutzers, begleitet von einem Kryptogramm und Daten;
- Zugreifen (416) auf einen Schlüssel und mindestens einen Referenzvektor, wobei der Schlüssel ein Schlüssel zur einmaligen Verwendung ist und nicht von Benutzerauthentifizierungsdaten abhängt, wobei der mindestens eine Referenzvektor zuvor ohne Verwendung von Referenz-Benutzerauthentifizierungsdaten erzeugt wurde;
- Erzeugen (418) eines Referenzkryptogramms unter Verwendung eines dritten Algorithmus (22), des Schlüssels, des mindestens einen Referenzvektors und der Daten;
- Überprüfen (420), ob das Referenzkryptogramm mit dem Kryptogramm übereinstimmt oder nicht;
- Authentifizieren (422) oder nicht (424) des jeweiligen Benutzers, wenn das Referenzkryptogramm mit dem Kryptogramm übereinstimmt oder nicht.

10. System zur Authentifizierung eines Benutzers,
**wobei** das System mindestens eine Vorrichtung (12) und mindestens einen Server (18) umfasst, wobei die Vorrichtung mit dem Server verbunden ist, wobei die Vorrichtung konfiguriert ist zum:
- Zugreifen (41) auf einen Schlüssel und mindestens einen Anfangsvektor, wobei der Schlüssel ein Schlüssel zur einmaligen Verwendung ist und nicht von Benutzerauthentifizierungsdaten abhängt, wobei der mindestens eine Anfangsvektor zuvor unter Verwendung eines ersten Algorithmus erzeugt wurde, auf mindestens einen Referenzvektor und Referenz-Benutzerauthentifizierungsdaten, wobei der mindestens eine Referenzvektor zuvor ohne Verwendung der Referenz-Benutzerauthentifizierungsdaten erzeugt wurde;
- Zugreifen auf Daten (42) und bereitgestellte Benutzerauthentifizierungsdaten (46);
- Erzeugen (48) mindestens eines Zwischenvektors unter Verwendung eines zweiten Algorithmus, des mindestens einen Anfangsvektors und der bereitgestellten Benutzerauthentifizierungsdaten; und
- Erzeugen (410) eines Kryptogramms unter Verwendung eines dritten Algorithmus, des Schlüssels, des mindestens einen Zwischenvektors und der Daten;
**und dadurch, dass** der dritte Server konfiguriert ist zum:
- Zugreifen (416) auf den Schlüssel und den mindestens einen Referenzvektor;
- Empfangen einer Anforderung (414) zur Authentifizierung eines Benutzers, begleitet von einem Kryptogramm und Daten;
- Erzeugen (418) eines Referenzkryptogramms unter Verwendung des dritten Algorithmus, des Schlüssels, des mindestens einen Referenzvektors und der Daten;
- Überprüfen (420), ob das Referenzkryptogramm mit dem Kryptogramm übereinstimmt oder nicht;
- Authentifizieren (422) oder nicht (424) des jeweiligen Benutzers, wenn das Referenzkryptogramm mit dem Kryptogramm übereinstimmt oder nicht.

## Revendications

1. Procédé (40) d'authentification d'un utilisateur, comprenant :
- l'accès (41), par un dispositif (12), à une clé et à au moins un vecteur initial, la clé étant une clé à usage unique et ne dépendant pas de données d'authentification d'utilisateur, l'au moins un vecteur initial étant préalablement généré à l'aide d'un premier algorithme, d'au moins un vecteur de référence et de données d'authentification d'utilisateur de référence, l'au moins un vecteur de référence étant préalablement généré sans utilisation des données d'authentification d'utilisateur de référence ;
- l'accès, par le dispositif, aux données (42) et aux données fournies d'authentification d'utilisateur (46) ;
- la génération (48), par le dispositif, d'au moins un vecteur intermédiaire au moyen d'un deuxième algorithme, de l'au moins un vecteur initial et des données fournies d'authentification d'utilisateur ;
- la génération (410), par le dispositif, d'un cryptogramme au moyen d'un troisième algorithme (22), de la clé, de l'au moins un vecteur intermédiaire et des données ;
- la réception (410), par un serveur (18), d'une demande (414) d'authentification d'un utilisateur accompagnée du cryptogramme et des données ;
- l'accès (416), par le serveur, à la clé et à l'au moins un vecteur de référence ;
- la génération (418), par le serveur, d'un cryptogramme de référence au moyen du troisième algorithme, de la clé, de l'au moins un vecteur de référence et des données ;
- le fait de vérifier (420), par le serveur, si le cryptogramme de référence correspond ou non au cryptogramme ; et
- le fait d'authentifier (422) ou non (424), par le serveur, si le cryptogramme de référence correspond ou non au cryptogramme, respectivement à l'utilisateur.

2. Procédé selon la revendication 1, dans lequel, tandis que les données comprennent des données de transaction de paiement, la demande d'authentification d'un utilisateur s'accompagne en outre d'une demande d'autorisation d'une transaction de paiement et de données relatives à un compte utilisateur et où le serveur ou un autre serveur récupère en outre au moins un identifiant associé à un compte d'utilisateur en fonction des données associées au compte d'utilisateur.

3. Procédé selon la revendication 1 ou 2, dans lequel le ou chaque vecteur de référence est valide pour une transaction donnée.

4. Procédé selon l'une quelconque des revendications 1 à 3, dans lequel les données d'authentification d'utilisateur comprennent au moins un élément d'un groupe comprenant :
- un numéro personnel d'identité ;
- au moins une empreinte biométrique ;
- des éléments d'identification d'utilisateur ;
- un mot de passe ;
- un code de déverrouillage.

5. Procédé selon la revendication 2, dans lequel l'au moins un identifiant associé à un compte utilisateur et/ou les données associées au compte utilisateur comprennent au moins un élément d'un groupe comprenant :
- un numéro de compte principal ;
- un numéro de compte principal dynamique ;
- un alias du numéro de compte principal ;
- une alternative au numéro de compte principal.

6. Procédé selon l'une quelconque des revendications 1 à 5, dans lequel le deuxième algorithme est un algorithme inverse du premier algorithme.

7. Procédé selon l'une quelconque des revendications 1 à 6, dans lequel le troisième algorithme comprend au moins un élément d'un groupe comprenant :
- un algorithme de type norme de chiffrement de données ou NCD ;
- un algorithme de type NCD triple ;
- un algorithme de type code d'authentification de messages ;
- un algorithme faisant appel à une clé symétrique.

8. Dispositif (12) d'authentification d'un utilisateur,
le dispositif étant conçu :
- pour accéder (41) à une clé et au moins un vecteur initial, la clé étant une clé à usage unique et ne dépendant pas des données d'authentification de l'utilisateur, l'au moins un vecteur initial étant préalablement généré à l'aide d'un premier algorithme, d'au moins un vecteur de référence et de données d'authentification d'utilisateur de référence, l'au moins un vecteur de référence étant préalablement généré sans utilisation des données d'authentification d'utilisateur de référence ;
- pour accéder aux données (42) et aux données fournies d'authentification d'utilisateur (46) ;
- pour générer (48) au moins un vecteur intermédiaire au moyen d'un second algorithme, de l'au moins un vecteur initial et des données fournies d'authentification d'utilisateur ; et
- pour générer (410) un cryptogramme au moyen d'un troisième algorithme, de la clé, de l'au moins un vecteur intermédiaire et des données ; et pour envoyer à un serveur une demande d'authentification de l'utilisateur accompagnée du cryptogramme et des données.

9. Serveur (18) d'authentification d'un utilisateur,
le serveur étant configuré :
- pour recevoir une demande (414) d'authentification d'un utilisateur accompagnée d'un cryptogramme et de données ;
- pour accéder (416) à une clé et à au moins un vecteur de référence, la clé étant une clé à usage unique et ne dépendant pas de données d'authentification d'utilisateur, l'au moins un vecteur de référence étant préalablement généré sans utilisation des données d'authentification d'utilisateur de référence ;
- pour générer (418) un cryptogramme de référence à l'aide d'un troisième algorithme (22), de la clé, de l'au moins un vecteur de référence et des données ;
- pour vérifier (420) si le cryptogramme de référence correspond ou non au cryptogramme ;
- pour authentifier (422) ou non (424) l'utilisateur, si le cryptogramme de référence correspond ou non au cryptogramme respectivement.

10. Système d'authentification d'un utilisateur,
le système comprenant au moins un dispositif (12) et au moins un serveur (18), le dispositif étant connecté au serveur, le dispositif étant configuré :
- pour accéder (41) à une clé et à au moins un vecteur initial, la clé étant une clé à usage unique et ne dépendant pas des données d'authentification d'utilisateur et l'au moins un vecteur initial étant préalablement généré à l'aide d'un premier algorithme, d'au moins un vecteur de référence et de données d'authentification d'utilisateur de référence, l'au moins un vecteur de référence étant préalablement généré sans utilisation des données d'authentification d'utilisateur de référence ;
- pour accéder aux données (42) et aux données fournies d'authentification d'utilisateur (46) ;
- pour générer (48) au moins un vecteur intermédiaire au moyen d'un second algorithme, de l'au moins un vecteur initial et des données fournies d'authentification d'utilisateur ; et
- pour générer (410) un cryptogramme à l'aide d'un troisième algorithme, de la clé, de l'au moins un vecteur intermédiaire et des données ;
**caractérisé en ce que** le serveur est en outre configuré :
- pour accéder (416) à la clé et à l'au moins un vecteur de référence ;
- pour recevoir une demande (414) d'authentification d'un utilisateur accompagnée du cryptogramme et des données ;
- pour générer (418) un cryptogramme de référence à l'aide du troisième algorithme, de la clé, de l'au moins un vecteur de référence et des données ;
- pour vérifier (420) si le cryptogramme de référence correspond ou non au cryptogramme ;
- pour authentifier (422) ou non (424) l'utilisateur, si le cryptogramme de référence correspond ou non au cryptogramme respectivement.
